# EUROPEAN PATENT APPLICATION

(11) **EP 4 716 221 A1**
(43) Date of publication of application: **25.03.2026**
(21) Application number: 24810339.2
(22) Date of filing: 17.05.2024
(51) Int. Cl.: H04N 21/2187

(54) **PUSHING PROCESSING METHOD, APPARATUS, DEVICE AND MEDIUM**

(30) Priority: 19.05.2023 CN 202310574044
(71) Applicant: Beijing Youzhuju Network Technology Co., Ltd., Beijing 101299 (CN)
(72) Inventor: LIU, Mengmeng, Beijing 100028 (CN); LI, Yan, Beijing 100028 (CN); HU, Jiali, Beijing 100028 (CN); XIE, Zhiyao, Beijing 100028 (CN); LI, Liya, Beijing 100028 (CN)
(74) Representative: Marks & Clerk LLP
(86) International application number: PCT/CN2024/094075
(87) International publication number: WO 2024/240097

(57) **Abstract**

Embodiments of the present disclosure relate to a push processing method and apparatus, a device, and a medium. The method includes: displaying, in response to a first preset operation, an object list interface and a plurality of entry tabs on a live streaming interface of a target live streaming room, where candidate objects displayed on the object list interface are candidate objects corresponding to the target live streaming room; and switching, in response to a trigger operation on an entry tab, the candidate objects displayed on the object list interface to candidate objects in a service scenario corresponding to the entry tab.

## Description

### CROSS-REFERENCE TO RELATED APPLICATION(S)

The present application claims the benefit of the Chinese Patent Application No. 2023105740444, filed on May 19, 2023. The entire teachings of the above application are incorporated herein by reference.

### FIELD

The present disclosure relates to the field of computer application technologies, and in particular, to a push processing method and apparatus, a device, and a medium.

### BACKGROUND

With the rise of short video applications, it has become increasingly common to use videos as a carrier for push.

In the related art, relevant live streaming push objects are pushed through live streaming videos, and the relevant live streaming push objects may be displayed by showing a live streaming object list on a live streaming interface.

However, only the live streaming push objects can be viewed on the live streaming interface described above, and when the live streaming videos contain push objects of other service scenarios, it is necessary to jump to a preset search platform corresponding to the other service scenarios to actively search for the relevant push objects, resulting in a long push path for the relevant objects of the other service scenarios.

### SUMMARY

In order to solve the above-mentioned technical problems or at least partially solve the above-mentioned technical problems, the present disclosure provides a push processing method and apparatus, a device, and a medium, to efficiently display relevant objects in a live streaming scenario and other service scenarios on a live streaming interface, and shorten a push path for objects in the other service scenarios.

An embodiment of the present disclosure provides a push processing method. The method includes: displaying, in response to a first preset operation, an object list interface and a plurality of entry tabs on a live streaming interface of a target live streaming room, where candidate objects displayed on the object list interface are candidate objects corresponding to the target live streaming room; and switching, in response to a trigger operation on an entry tab, the candidate objects displayed on the object list interface to candidate objects in a service scenario corresponding to the entry tab.

An embodiment of the present disclosure further provides a push processing apparatus. The apparatus includes: a first display module configured to display, in response to a first preset operation, an object list interface and a plurality of entry tabs on a live streaming interface of a target live streaming room, where candidate objects displayed on the object list interface are candidate objects corresponding to the target live streaming room; and a second display module configured to switch, in response to a trigger operation on an entry tab, the candidate objects displayed on the object list interface to candidate objects in a service scenario corresponding to the entry tab.

An embodiment of the present disclosure further provides an electronic device. The electronic device includes: a processor; and a memory configured to store instructions executable by the processor, where the processor is configured to read the executable instructions from the memory, and execute the instructions to implement the push processing method provided in the embodiment of the present disclosure.

An embodiment of the present disclosure further provides a computer-readable storage medium having a computer program stored therein, where the computer program is configured to perform the push processing method provided in the embodiment of the present disclosure.

### BRIEF DESCRIPTION OF THE DRAWINGS

The above-mentioned and other features, advantages, and aspects of embodiments of the present disclosure become more apparent with reference to the accompanying drawings and the following specific implementations. Throughout the accompanying drawings, the same or similar reference numerals denote the same or similar elements. It should be understood that the accompanying drawings are schematic and that parts and elements are not necessarily drawn to scale.
FIG. 1 is a schematic flowchart of a push processing method according to an embodiment of the present disclosure;
FIG. 2 is a schematic diagram of a push processing scenario according to an embodiment of the present disclosure;
FIG. 3A is a schematic diagram of another push processing scenario according to an embodiment of the present disclosure;
FIG. 3B is a schematic diagram of another push processing scenario according to an embodiment of the present disclosure;
FIG. 4A is a schematic diagram of another push processing scenario according to an embodiment of the present disclosure;
FIG. 4B is a schematic diagram of another push processing scenario according to an embodiment of the present disclosure;
FIG. 5 is a schematic diagram of another push processing scenario according to an embodiment of the present disclosure;
FIG. 6 is a schematic diagram of another push processing scenario according to an embodiment of the present disclosure;
FIG. 7 is a schematic diagram of another push processing scenario according to an embodiment of the present disclosure;
FIG. 8 is a schematic diagram of another push processing scenario according to an embodiment of the present disclosure;
FIG. 9 is a schematic structural diagram of a push processing apparatus according to an embodiment of the present disclosure; and
FIG. 10 is a schematic structural diagram of an electronic device according to an embodiment of the present disclosure.

### DETAILED DESCRIPTION OF EMBODIMENTS

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Further, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or their interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

In order to solve the above-mentioned problems, embodiments of the present disclosure provide a push processing method. In the method, in addition to achieving efficient display of relevant objects in a live streaming scenario and other service scenarios on a live streaming interface without the need to jump to other platforms to search for objects in the other service scenarios, a push path for the objects in the other service scenarios is greatly shortened, and a push success rate for the relevant objects is increased.

The method is described below with reference to specific embodiments.

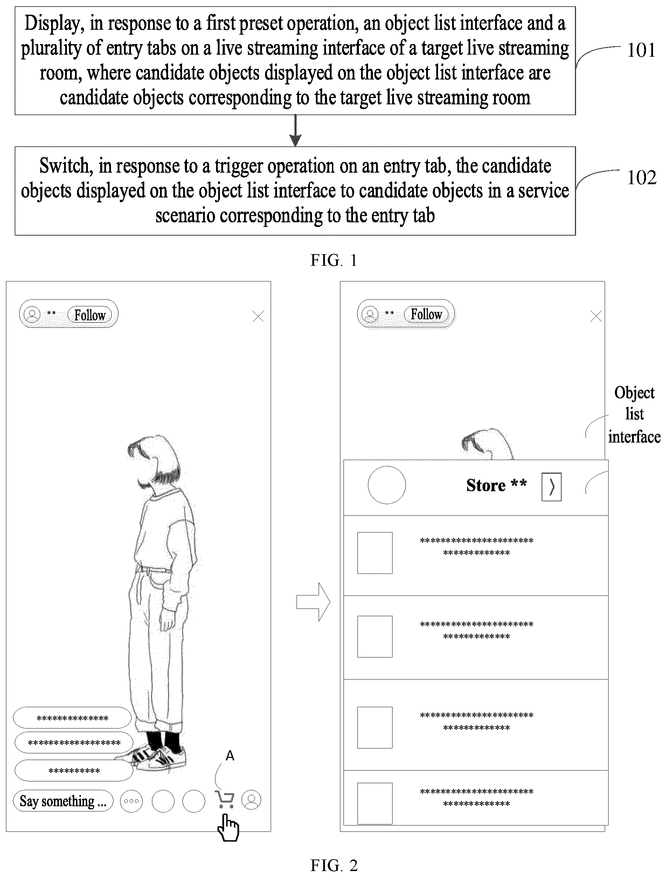

FIG. 1 is a schematic flowchart of a push processing method according to an embodiment of the present disclosure. The method may be performed by a push processing apparatus, where the apparatus may be implemented using software and/or hardware, and may generally be integrated into an electronic device. As shown in FIG. 1, the method includes the following steps.

Step 101: Display, in response to a first preset operation, an object list interface and a plurality of entry tabs on a live streaming interface of a target live streaming room. Candidate objects displayed on the object list interface are candidate objects corresponding to the target live streaming room.

The candidate objects corresponding to the target live streaming room may be understood as live streaming push objects pushed in a current live streaming room, including an object being pushed in the target live streaming room, as well as objects that have not been pushed or have already been pushed. The candidate objects mentioned in this embodiment of the present disclosure include, but are not limited to, food, clothes, kitchenware, etc. In some possible embodiments, to facilitate the visual display of a candidate object that is currently being live streamed, etc., the candidate objects corresponding to the target live streaming room may also be sorted according to a live streaming order. The candidate objects with a larger time difference between push time in the target live streaming room and current time are ranked lower, where the candidate object that is currently being pushed is located at the top of the object list interface, and prompt information such as "Live" may be displayed to visually indicate the candidate object that is currently being live streamed.

In an embodiment of the present disclosure, the first preset operation is obtained. The above-mentioned first preset operation varies in different application scenarios. The examples are as follows:

In some possible examples, a second preset operation on the live streaming interface is obtained, where the second preset operation also varies in different application scenarios. For example, in some possible implementations, as shown in FIG. 2, a preset trigger control A for a live streaming object display interface is set on the live streaming interface of a current live streaming video, and when the control A is triggered, it is considered that the second preset operation is obtained.

In this example, in response to obtaining the second preset operation, the object list interface and a first preset entry are displayed on the live streaming interface, where the first preset entry is an entry used to trigger the display of the plurality of entry tabs on the live streaming interface. A display style and a display position of the first preset entry may be set according to scenario needs. For example, continuing with the scenario shown in FIG. 2 as an example, in response to the second preset operation, the object list interface may be displayed on the live streaming interface, and displays the candidate objects corresponding to the target live streaming room, where the display style of the first preset entry includes "Store **" and an account avatar corresponding to the "Store **", with the display position being above the candidate objects corresponding to the live streaming room, etc.

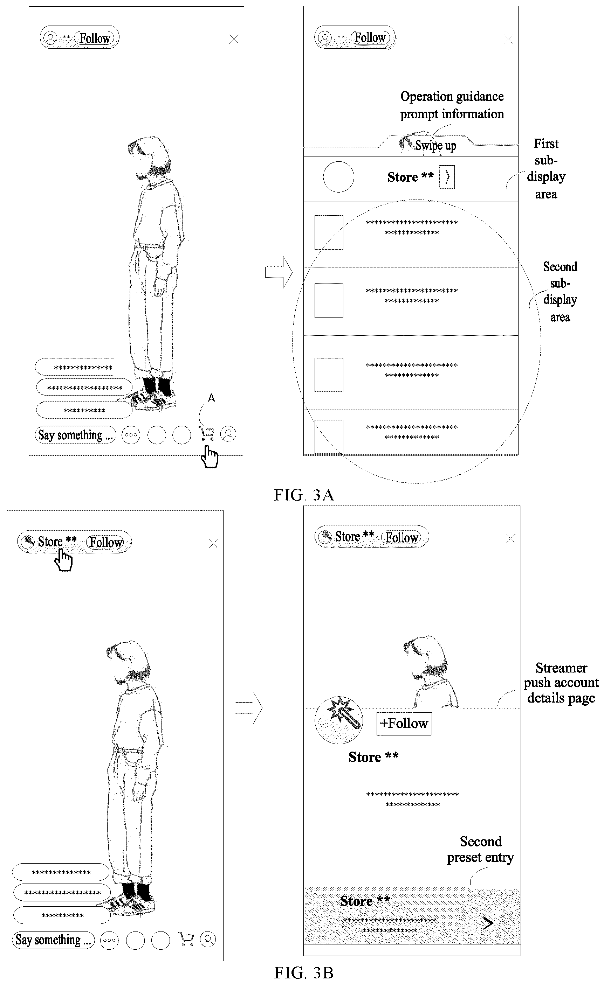

In this embodiment, as shown in FIG. 3A, the object list interface includes a first sub-display area and a second sub-display area, where the first sub-display area is used to display streamer push account information corresponding to the target live streaming room. The streamer push account information includes, but is not limited to, an account name, an account avatar, etc. of a streamer push account. The account avatar and the account name of the streamer push account information may be used as the first preset entry. The second sub-display area is used to display the candidate objects corresponding to the target live streaming room. In addition to a vertical arrangement shown in the figure, the first sub-display area and the second sub-display area may alternatively be arranged in other manners in other possible implementations, which are not enumerated herein.

Additionally, operation guidance prompt information may also be displayed on the live streaming interface. The operation guidance prompt information may be used to indicate an operation method for the first preset operation. For example, when the first preset operation is a "swipe-up operation", the operation guidance prompt information may be text prompt information such as "Swipe up", to learn according to the operation guidance prompt information that the display of the plurality of entry tabs may also be triggered through the first preset operation. Still referring to FIG. 3A, to enhance the noticeability of the operation guidance prompt information, the operation guidance prompt information may be displayed at a position that is adjacent to the object list interface and that is located on an upper side of the object list interface.

In some possible implementations, a trigger operation on the first preset entry may be used as the first preset operation.

In some possible implementations, when the "swipe-up operation" on the object list interface is used as the first preset operation, an operation method corresponding to the above-mentioned "swipe-up operation" varies in different application scenarios. In some possible examples, a trigger operation on the object list interface is obtained, when a trigger duration for the object list interface is greater than a first preset duration threshold, it is determined that the object list interface is selected, and when it is detected that a drag distance of an upward drag on the selected object list interface exceeds a first preset distance threshold, it is considered that the "swipe-up operation" is obtained. In some possible embodiments, a trigger operation on the operation guidance information of the first preset operation is obtained, when a trigger duration for the operation guidance information is greater than a second preset duration threshold, it is determined that a corresponding object list interface is selected, and when it is detected that a drag distance of an upward drag on the selected object list interface is greater than a second preset distance threshold, it is considered that the "swipe-up operation" is obtained. The first preset duration threshold, the second preset duration threshold, the first preset distance threshold, and the second distance threshold described above may be set according to practical scenario needs, which are not limited herein. In some possible examples, a trigger operation on the streamer push account corresponding to the target live streaming room may also be obtained. A streamer push account details page is displayed on the live streaming interface, and includes preset streamer push account information of the streamer push account and a second preset entry. The streamer push account detailed information includes, but is not limited to, the account name, the account avatar, etc. of the streamer push account, the second preset entry is a display entry for the object list interface and the plurality of entry tabs, and a display position and a display style of the second preset entry may also be set according to scenario needs.

For example, as shown in FIG. 3B, the streamer push account such as "Store **" displayed at the upper left corner of the target live streaming room is triggered, and accordingly the streamer push account information such as the "Store **" and a corresponding store avatar, as well as the second preset entry are displayed on the live streaming interface, where the display style of the second preset entry is the "Store **", etc., and the display position is below the streamer push account details page.

Further, after the first preset operation is obtained, the object list interface and the plurality of entry tabs are displayed on the live streaming interface of the target live streaming room in response to the first preset operation, and since the above-mentioned first preset operation may vary according to scenario requirements, the object list interface and the plurality of entry tabs may be displayed on the live streaming interface through a plurality of paths.

A candidate object that is currently being displayed on the object list interface is a candidate object of a target live streaming room object, namely, a relevant object in a live streaming scenario is first displayed by default. Each of the plurality of entry tabs corresponds to one service scenario, and the different entry tabs correspond to different service scenarios. The service scenarios include at least one of the live streaming scenario, a store scenario, an activity scenario (including but not limited to holiday promotional activities), and a push scenario (e.g., push scenarios for some objects with a high push success rate or a high score).

In an embodiment of the present disclosure, a service scenario push account corresponding to each entry tab belongs to preset associated accounts of the streamer push account corresponding to the target live streaming room, thereby avoiding pushing some candidate objects unrelated to a live streaming object of the target live streaming room on the live streaming interface. The preset associated accounts may be defined according to scenario needs. For example, when the streamer push account is a streamer push account corresponding to "Store B", the preset associated account is a store account of the "Store B", etc. For example, when the streamer push account is used to push "C-brand foods", the preset associated account is a store account of "Brand C" or another streamer push account that pushes the "C-brand foods".

In this embodiment, to visually indicate that the object displayed on the current object list interface belongs to the live streaming scenario, after the first preset operation is received, the entry tab corresponding to the live streaming scenario is displayed in a preset selected state, where a display style of the preset selected state varies in different application scenarios. In some possible examples, the entry tab corresponding to the live streaming scenario may be displayed in a highlighted state to indicate that the entry tab corresponding to the live streaming scenario is in the preset selected state.

Step 102: Switch, in response to a trigger operation on an entry tab, the candidate objects displayed on the object list interface to candidate objects in a service scenario corresponding to the entry tab.

In an embodiment of the present disclosure, the trigger operation on one of the plurality of entry tabs may be obtained, and the candidate object displayed on the object list interface is switched to the candidate object in the service scenario corresponding to the entry tab. To visually indicate a service scenario in which the candidate object is currently being displayed, the entry tab corresponding to the current trigger operation is switched to the preset selected state, and in this case, the entry tab corresponding to the live streaming scenario is no longer in the preset selected state. In this embodiment, by triggering the entry tabs corresponding to the other service scenarios on the live streaming interface, the candidate objects in the other service scenarios can be displayed on the live streaming interface without the need to jump to other search platforms or pages, thereby greatly shortening a path for displaying the candidate objects in the other service scenarios and facilitating in increasing the push success rate for the relevant candidate objects.

For example, when the entry tab corresponding to the trigger operation is a "Store" entry tab, the candidate object displayed on the object list interface can be directly switched to a candidate object corresponding to the "Store" without the need to jump to a "Store" page. The object list interface is used as a container, and candidate objects in the container are switched to implement "smooth" viewing of the candidate objects in different service scenarios.

In a practical execution process, to avoid interrupting a live streaming video in the live streaming room, the live streaming interface includes a first interface display area, a second interface display area, and a third interface display area. The first interface display area displays live streaming image information from the target live streaming room, that is, the corresponding live streaming image information can still be watched on the live streaming interface. The second interface display area displays the plurality of entry tabs, and the third interface display area displays the object list interface. By performing rendering and displaying in the different display areas on the live streaming interface, the live streaming image information, the plurality of entry tabs, and the object list interface can be displayed without the need for page jumps or interface switches.

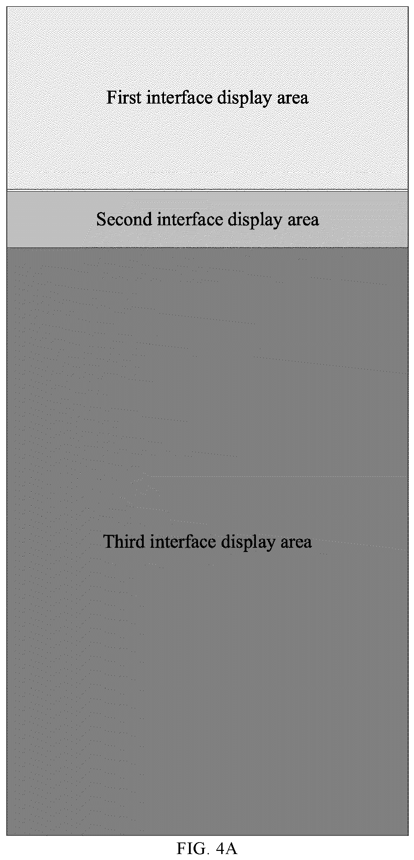

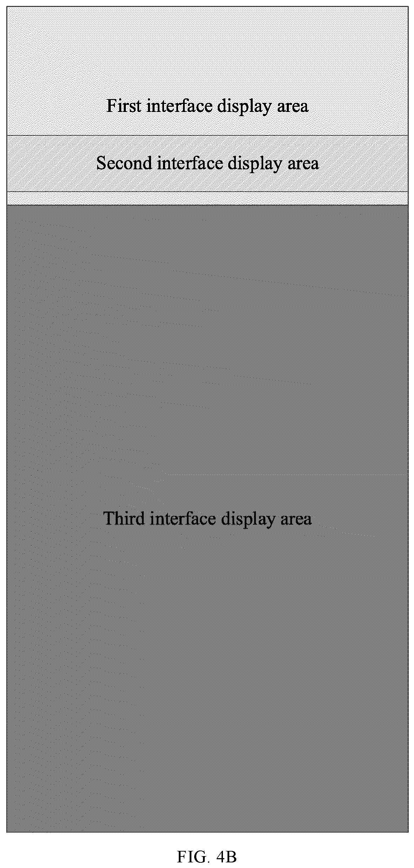

A layout of the above-mentioned three interface display areas may be set according to scenario needs and is not limited herein. In some possible embodiments, as shown in FIG. 4A, the first interface display area, the second interface display area, and the third display area are distributed from top to bottom. Alternatively, in some possible embodiments, as shown in FIG. 4B, the second interface display area is located within the first interface display area, and the third interface display area is located below the first interface display area. To reduce obstruction of the live streaming image information displayed in the first interface display area, the transparency of the second interface display area may be greater than a preset transparency threshold, or the second interface display area is a transparent area.

Additionally, in the practical execution process, when the live streaming image information of the target live streaming room is displayed in the first interface display area, to display key live streaming image information in the live streaming room, a live streaming key image area in the target live streaming room may also be identified, and the live streaming key image area displays the live streaming image information following the first interface display area.

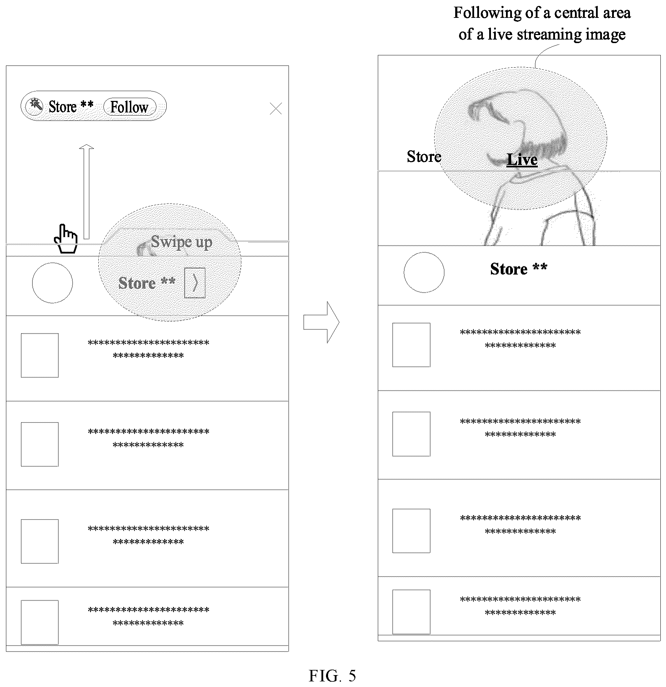

It should be noted that in different application scenarios, methods for determining the live streaming key image area are different. In some possible embodiments, considering that a live streaming key image is usually displayed in a central area of a live streaming image, for example, as shown in FIG. 5 (an entry tab in the figure includes a live streaming tab corresponding to a live streaming scenario and a store tab corresponding to a store service scenario), a "model user", etc. is displayed in the central area of the live streaming image, and therefore, in this embodiment, the central area of the live streaming image of the target live streaming room and the image information corresponding to the central area of the live streaming image are identified, and the live streaming image information including the central area of the live streaming image is displayed in the first interface display area. For example, a candidate live streaming image in the live streaming interface that includes the central area of the live streaming image may be determined. After candidate live streaming image information is scaled according to a preset scaling ratio, a target live streaming image is obtained, and is used as the live streaming image information to be displayed in the first interface display area. The preset scaling ratio is determined based on a display size of the first interface display area, which is not limited herein.

In some possible embodiments, image semantic recognition may be performed on the live streaming image information of the target live streaming room. A target push object in the live streaming image information is determined based on a recognition result. For example, in a target live streaming room for "C-brand foods", the target push object in the live streaming image information is determined as specific "C-brand foods" pushed in current live streaming based on the recognition result, and in this case, the live streaming image information including the "C-brand foods" may be displayed in the first interface display area. For example, a candidate live streaming image area including the "C-brand foods" in the live streaming interface may be determined. After the candidate live streaming image area is scaled according to the preset scaling ratio, the target live streaming image is obtained, and the target live streaming image is used as the live streaming image information to be displayed in the first interface display area. Similarly, the preset scaling ratio in this embodiment is determined based on the display size of the first interface display area, which is not limited herein.

In a practical implementation process, specific display content when displaying the candidate object on the object list interface may be set according to scenario needs, for example, displaying attribute information such as an image and a size of the candidate object, and an order placement control.

In summary, according to the push processing method in this embodiment of the present disclosure, in response to obtaining the first preset operation, the object list interface and the plurality of entry tabs are first displayed on the live streaming interface of the target live streaming room, where the candidate objects displayed on the object list interface are the candidate objects corresponding to the target live streaming room; and in response to the trigger operation on an entry tab, the candidate objects displayed on the object list interface are switched to the candidate objects in the service scenario corresponding to the entry tab. In the technical solution, efficient display of the relevant objects in the live streaming scenario and the other service scenarios is achieved on the live streaming interface, and the push path for the objects in the other service scenarios is shortened.

Based on the above-mentioned embodiment, a relevant interactive control may also be displayed on the live streaming interface, and more interactive requirements are satisfied through an interactive operation on the relevant interactive control.

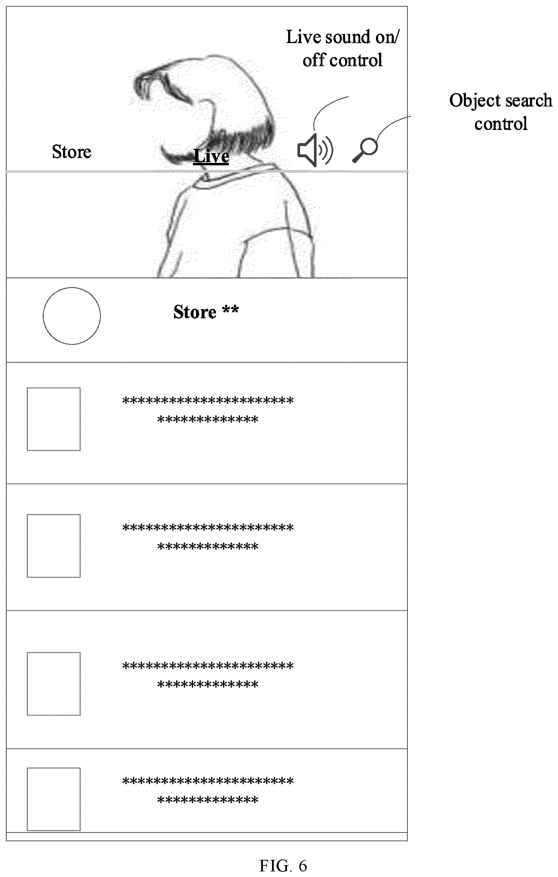

In an embodiment of the present disclosure, the live streaming interface further includes a live sound on/off control. The live sound on/off control is displayed on the live streaming interface. As shown in FIG. 6, the live sound on/off control may be displayed in the second interface display area, etc. The live sound on/off control includes an on state and an off state, where the on state and the off state may be switched through a trigger operation. When the live sound on/off control is in the on state, live audio information corresponding to the target live streaming room is played, to avoid missing relevant live streaming information of the target live streaming room. When the live sound on/off control is in the off state, the live audio information corresponding to the target live streaming room is not played, to avoid disturbance on the user in viewing the object list interface, etc.

In an embodiment of the present disclosure, the live streaming interface further includes an object search control. Still referring to FIG. 6, when the live streaming interface includes the live sound on/off control and the object search control, the object search control may also be displayed in the second interface display area, etc. After a trigger operation on the object search control is obtained, an object search prompt box is displayed, where the object search prompt box is used to receive information about a candidate object to be searched, thereby satisfying search requirements for the candidate object.

Considering a possible requirement to return to a display scenario of the object list interface corresponding to the target live streaming room in the practical execution process, in an embodiment of the present disclosure, a third preset operation on the live streaming interface may also be obtained. In response to obtaining the third preset operation on the live streaming interface, display of the object list interface corresponding to the target live streaming room is switched on the live streaming interface. To indicate that the third preset operation may be used to return to the display scenario of the object list interface corresponding to the target live streaming room, operation guidance information corresponding to the third preset operation may also be displayed in an adjacent area above the object list interface. The operation guidance information may be text prompt information such as "Swipe down".

In this embodiment, a "swipe-down operation" on the object list interface is used as the third preset operation. In different application scenarios, an operation method corresponding to the above-mentioned "swipe-down operation" varies. In some possible examples, a trigger operation on the object list interface is obtained, and when a trigger duration for the object list interface is greater than a third preset duration threshold, it is determined that the object list interface is selected, and when it is detected that a drag distance of a downward drag on the selected object list interface exceeds a third preset distance threshold, it is considered that the "swipe-down operation" is obtained. In some possible embodiments, a trigger operation on the operation guidance information of the third preset operation is obtained, when a trigger duration for the operation guidance information is greater than a fourth preset duration threshold, it is determined that a corresponding object list interface is selected, and when it is detected that a drag distance of a downward drag on the selected object list interface is greater than a fourth preset distance threshold, it is considered that the "swipe-down operation" is obtained. The third preset duration threshold, the fourth preset duration threshold, the third preset distance threshold, and the fourth distance threshold described above may be set according to practical scenario needs, which are not limited herein.

In an embodiment of the present disclosure, a preset exit control may also be displayed on the live streaming interface, thereby switching, in response to a trigger operation on the preset exit control, the display of the object list interface corresponding to the target live streaming room on the live streaming interface.

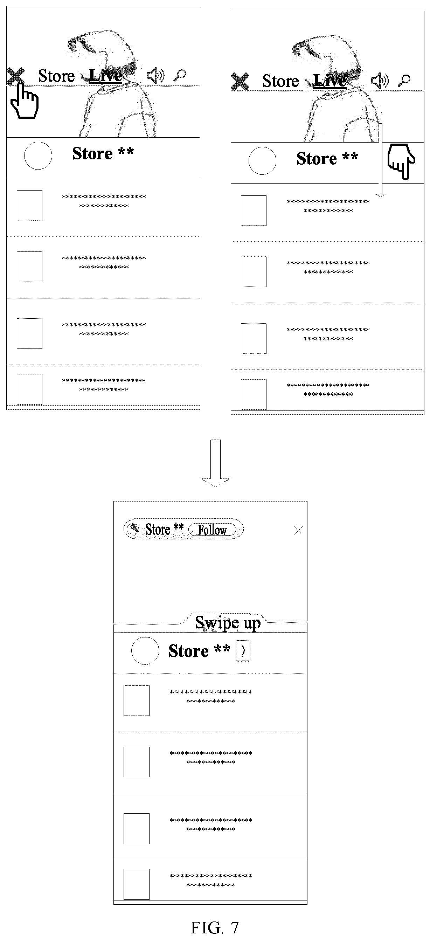

For example, as shown in FIG. 7, when the third preset operation is the above-mentioned swipe-down operation and the preset exit control is a control "X" displayed at the upper left corner of the second interface display area, during displaying of the plurality of entry tabs and the object list interface, if the swipe-down operation is detected, the display of the object list interface corresponding to the target live streaming room may be switched on the live streaming interface, or when a trigger operation on the control "X" is detected, the plurality of entry tabs are no longer displayed on the live streaming interface, and the display of the object list interface corresponding to the target live streaming room is switched on the live streaming interface.

To make those skilled in the art understand the push processing method in this embodiment of the present disclosure more comprehensively, the process of push processing is exemplarily described below in conjunction with specific application scenarios. In this scenario, the first preset operation is the swipe-up operation, the second preset operation is a trigger operation on a preset control W of the lower right corner of the live streaming interface, the third preset operation is the swipe-down operation, the plurality of entry tabs include a live streaming tab corresponding to a live streaming scenario and a store tab corresponding to a store service scenario, the streamer push account is a live streaming room account "Store Q", and the service scenario push account corresponding to the service scenario is the account "Store Q".

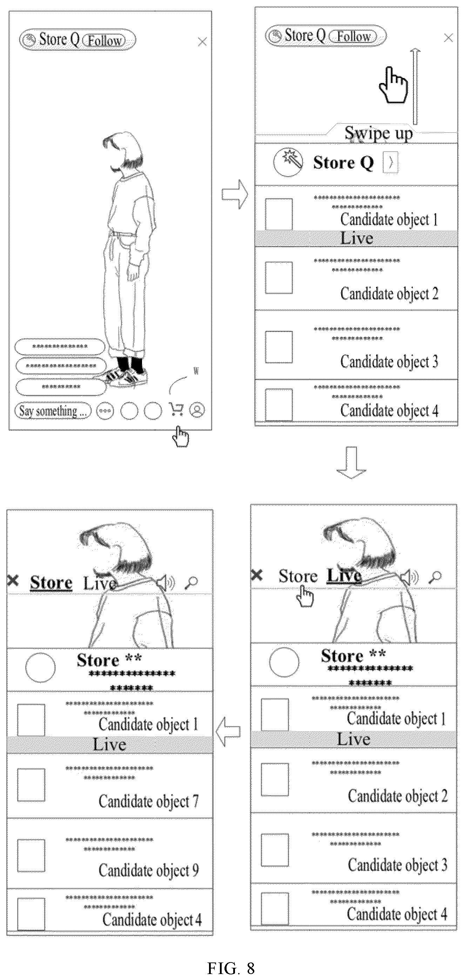

In this embodiment, referring to FIG. 8, in response to the trigger operation on the control W on the live streaming interface, the object list interface is displayed on the live streaming interface, and the object list interface includes a candidate object 1, a candidate object 2, a candidate object 3, a candidate object 4, etc., corresponding to the target live streaming room, where the candidate objects are candidate objects that are currently being live streamed, and prompt information "Live" is displayed in a list area where the candidate object 1 in the object list interface is located. The object list interface further includes the first preset entry. The first preset entry is displayed as an account avatar and an account name of the "Store Q", where the first preset entry is displayed in the first sub-display area of the object list interface, and the candidate object 1, the candidate object 2, the candidate object 3, the candidate object 4, etc., are displayed in the second sub-display area of the object list interface.

In response to obtaining the swipe-up operation, the live streaming image information is displayed in the first interface display area on the live streaming interface, the plurality of entry tabs are displayed in the second interface display area, and the object list interface is displayed in the third interface display area, where the object list interface displayed in the third interface display area visually moves upwards, some storefront information, etc. of the account "Store Q" may be switchably displayed in the first sub-display area, and therefore the whole process involves no image switching or page jumps, providing a natural and smooth transition.

When the plurality of entry tabs are displayed, the entry tab "Live" is in the preset selected state, indicating that the candidate object displayed in the third interface display area at this time is the candidate object corresponding to the target live streaming room.

In this embodiment, still referring to FIG. 8, when the entry tab "Store" is triggered, the candidate objects in the third interface display area are switched to the candidate object 1, a candidate object 7, a candidate object 9, the candidate object 4, etc., corresponding to the "Store Q", thereby directly learning the candidate objects of the "Store Q" in the third interface display area, and shortening the push path for the candidate objects of the "Store Q".

In this embodiment, when the control "X" is further displayed in the second interface display area, if the swipe-down operation or a trigger operation on the control "X" is detected, return to the display scenario, etc. of the object list interface corresponding to the target live streaming room in FIG. 8.

In summary, according to the push processing method in the embodiments of the present disclosure, the off of the live audio information, exiting from the display scenario of the plurality of entry tabs, etc. may be achieved based on the interactive operation on the live streaming interface, thereby further enhancing the flexibility of pushing the relevant objects.

In order to implement the above-mentioned embodiments, the present disclosure further provides a push processing apparatus.

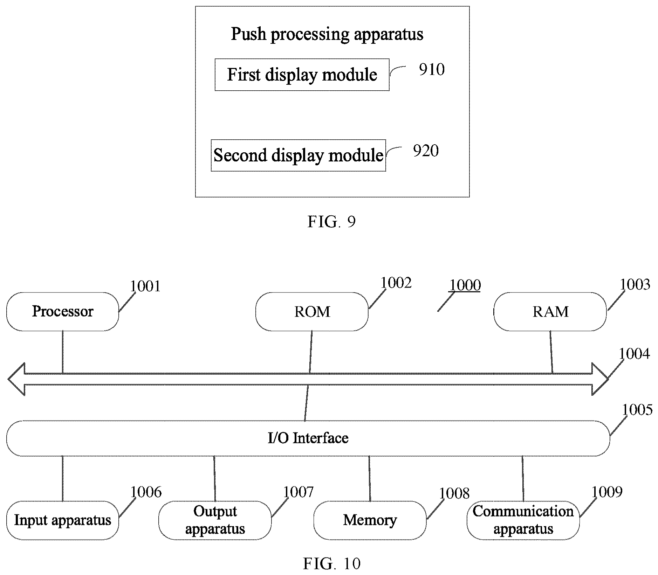

FIG. 9 is a schematic structural diagram of a push processing apparatus according to an embodiment of the present disclosure. The apparatus may be implemented by software and/or hardware, and may generally be integrated into an electronic device for push processing. As shown in FIG. 9, the apparatus includes: a first display module 910 and a second display module 920.

The first display module 910 is configured to display, in response to a first preset operation, an object list interface and a plurality of entry tabs on a live streaming interface of a target live streaming room, where candidate objects displayed on the object list interface are candidate objects corresponding to the target live streaming room; and
the second display module 920 is configured to switch, in response to a trigger operation on an entry tab, the candidate objects displayed on the object list interface to candidate objects in a service scenario corresponding to the entry tab.

The push processing apparatus provided in this embodiment of the present disclosure may perform the push processing method provided in any one of the embodiments of the present disclosure, and has corresponding functional modules for performing the method and corresponding beneficial effects, which are not repeated herein.

In order to implement the above-mentioned embodiments, the present disclosure further provides a computer program product, including a computer program/instructions that, when executed by a processor, implements/implement the push processing method in the above-mentioned embodiments.

FIG. 10 is a schematic structural diagram of an electronic device according to an embodiment of the present disclosure.

Reference is made specifically to FIG. 10 below, which is a schematic structural diagram of an electronic device 1000 suitable for implementing the embodiments of the present disclosure. The electronic device 1000 in this embodiment of the present disclosure may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (such as a vehicle navigation terminal), and fixed terminals such as a digital TV and a desktop computer. The electronic device shown in FIG. 10 is merely an example, and shall not impose any limitation on the function and scope of use of the embodiments of the present disclosure.

As shown in FIG. 10, the electronic device 1000 may include a processor (e.g., a central processing unit and a graphics processing unit) 1001 that may perform a variety of appropriate actions and processing in accordance with a program stored in a read-only memory (ROM) 1002 or a program loaded from a memory 1008 into a random-access memory (RAM) 1003. The RAM 1003 further stores various programs and data required for the operation of the electronic device 1000. The processor 1001, the ROM 1002, and the RAM 1003 are connected to each other through a bus 1004. An input/output (I/O) interface 1005 is also connected to the bus 1004.

Generally, the following apparatuses may be connected to the I/O interface 1005: an input apparatus 1006 including, for example, a touchscreen, a touchpad, a keyboard, a mouse, a camera, a microphone, an accelerometer, and a gyroscope; an output apparatus 1007 including, for example, a liquid crystal display (LCD), a speaker, and a vibrator; the memory 1008 including, for example, a magnetic tape and a hard disk; and a communication apparatus 1009. The communication apparatus 1009 may allow the electronic device 1000 to perform wireless or wired communication with other devices to exchange data. Although FIG. 10 shows the electronic device 1000 having various apparatuses, it should be understood that it is not required to implement or have all of the shown apparatuses. More or fewer apparatuses may alternatively be implemented or provided.

In particular, according to an embodiment of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 1009, installed from the memory 1008, or installed from the ROM 1002. When the computer program is executed by the processor 1001, the above-mentioned functions defined in the push processing method in the embodiment of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, with the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium may send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above-mentioned computer-readable medium may be contained in the above-mentioned electronic device. Alternatively, the computer-readable medium may exist independently, without being assembled into the electronic device.

The above-mentioned computer-readable medium carries one or more programs that, when executed by the electronic device, cause the electronic device to:
first display, in response to obtaining a first preset operation, an object list interface and a plurality of entry tabs on a live streaming interface of a target live streaming room, where candidate objects displayed on the object list interface are candidate objects corresponding to the target live streaming room; and switch, in response to a trigger operation on an entry tab, the candidate objects displayed on the object list interface to candidate objects in a service scenario corresponding to the entry tab. In the technical solution, efficient display of the relevant objects in the live streaming scenario and the other service scenarios is achieved on the live streaming interface, and the push path for the objects in the other service scenarios is shortened.

The electronic device may write computer program code for performing operations of the present disclosure in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented system architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession may actually be performed substantially in parallel, or they can sometimes be performed in reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a unit does not constitute a limitation on the unit itself under certain circumstances.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned concept of disclosure. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments may also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A push processing method, comprising:
displaying, in response to a first preset operation, an object list interface and a plurality of entry tabs on a live streaming interface of a target live streaming room, wherein candidate objects displayed on the object list interface are candidate objects corresponding to the target live streaming room; and
switching, in response to a trigger operation on an entry tab, the candidate objects displayed on the object list interface to candidate objects in a service scenario corresponding to the entry tab.

2. The method according to claim 1, wherein before the response to a first preset operation, the method further comprises:
displaying the object list interface and/or a first preset entry on the live streaming interface in response to a second preset operation on the live streaming interface, wherein the first preset entry is an entry used to trigger the display of the plurality of entry tabs on the live streaming interface; and
using a detected preset interface operation on the object list interface as the first preset operation, or using a detected trigger operation on the first preset entry as the first preset operation.

3. The method according to claim 1, wherein before the response to a first preset operation, the method further comprises:
in response to a trigger operation on a streamer push account corresponding to the target live streaming room, displaying a streamer push account details page on the live streaming interface, wherein the streamer push account details page comprises preset streamer push account information of the streamer push account and a second preset entry, and the second preset entry is a display entry for the object list interface and the plurality of entry tabs; and
using acquisition of a trigger operation on the second preset entry as the first preset operation.

4. The method according to claim 1, wherein the live streaming interface comprises a first interface display area, a second interface display area, and a third interface display area, wherein the first interface display area, the second interface display area, and the third interface display area are distributed from top to bottom, or the second interface display area is located within the first interface display area and the third interface display area is located below the first interface display area, wherein
live streaming image information of the target live streaming room is displayed in the first interface display area;
the plurality of entry tabs are displayed in the second interface display area; and
the object list interface is displayed in the third interface display area.

5. The method according to claim 1, wherein each of the plurality of entry tabs corresponds to one service scenario, and the entry tabs correspond to different service scenarios, wherein the service scenarios comprise a live streaming scenario and at least one of a store scenario, an activity scenario, and a push scenario; and when a trigger operation on an entry tab is received, a display state of the entry tab is set to a preset selected state, wherein when the first preset operation is received, an entry tab corresponding to the live streaming scenario is in the preset selected state.

6. The method according to any one of claims 1 to 5, wherein
a service scenario push account in a service scenario corresponding to each entry tab belongs to preset associated accounts of the streamer push account corresponding to the target live streaming room.

7. The method according to claim 2, wherein before the step of displaying, in response to a first preset operation, an object list interface and a plurality of entry tabs on a live streaming interface of a target live streaming room, the object list interface comprises a first sub-display area and a second sub-display area, wherein the first sub-display area is used to display streamer push account information corresponding to the target live streaming room, and an account avatar and an account name in the streamer push account information corresponding to the target live streaming room are used as the first preset entry; and the second sub-display area is used to display the candidate objects corresponding to the target live streaming room; and
the live streaming interface of the target live streaming room further comprises operation guidance prompt information, and the operation guidance prompt information is used to indicate an operation method of the first preset operation, wherein the operation guidance prompt information is displayed at a position that is adjacent to the object list interface and that is located on an upper side of the object list interface.

8. The method according to claim 4, wherein the live streaming interface further comprises a live sound on/off control, wherein when the live sound on/off control is in an on state, live audio information corresponding to the target live streaming room is played, and when the live sound on/off control is in an off state, the live audio information corresponding to the target live streaming room is not played.

9. The method according to claim 4 or 8, wherein the live streaming interface further comprises an object search control, wherein after a trigger operation on the object search control is obtained, an object search prompt box is displayed, and the object search prompt box is used to receive information about a candidate object to be searched.

10. The method according to claim 4, wherein the live streaming interface further comprises: a preset exit control, wherein
in response to a third preset operation on the live streaming interface, the display of the object list interface corresponding to the target live streaming room is switched on the live streaming interface; or
in response to a trigger operation on the preset exit control, the display of the object list interface corresponding to the target live streaming room is switched on the live streaming interface.

11. A push processing apparatus, comprising:
a first display module configured to display, in response to a first preset operation, an object list interface and a plurality of entry tabs on a live streaming interface of a target live streaming room, wherein candidate objects displayed on the object list interface are candidate objects corresponding to the target live streaming room; and
a second display module configured to switch, in response to a trigger operation on an entry tab, the candidate objects displayed on the object list interface to candidate objects in a service scenario corresponding to the entry tab.

12. An electronic device, comprising:
a processor; and
a memory configured to store instructions executable by the processor, wherein
the processor is configured to read the executable instructions from the memory, and execute the executable instructions to implement the push processing method according to any one of claims 1 to 10.

13. A computer-readable storage medium having a computer program stored therein, wherein the computer program is configured to perform the push processing method according to any one of claims 1 to 10.
